## Europäisches Patentamt
## European Patent Office
## Office européen des brevets

(19)

(11) Veröffentlichungsnummer : **0 383 364 B1**

(12) **EUROPÄISCHE PATENTSCHRIFT**

(45) Veröffentlichungstag der Patentschrift :
**29.07.92 Patentblatt 92/31**

(21) Anmeldenummer : **90106093.9**

(22) Anmeldetag : **03.04.86**

(51) Int. Cl.⁵ : **B29C 45/14,** B29C 67/18,
**A44C 5/00,** B29C 33/18

(54) **Verfahren zur Herstellung wenigstens zweilagiger, ringförmiger Gegenstände.**

(30) Priorität : **15.04.85 AT 1123/85**

(43) Veröffentlichungstag der Anmeldung :
**22.08.90 Patentblatt 90/34**

(45) Bekanntmachung des Hinweises auf die
Patenterteilung :
**29.07.92 Patentblatt 92/31**

(84) Benannte Vertragsstaaten :
**CH DE FR GB LI**

(56) Entgegenhaltungen :
CH-A- 644 057
FR-A- 2 188 430
FR-A- 2 505 628

(60) Veröffentlichungsnummer der früheren
Anmeldung nach Art. 76 EPü : **0 199 708**

(73) Patentinhaber : **Hirsch Armbänder**
**Gesellschaft m.b.H.**
**Hirschstrasse 5**
**A-9021 Klagenfurt (Kärnten) (AT)**

(72) Erfinder : **Hirsch, Hermann**
**Hirschstrasse 5**
**A-9021 Klagenfurt (Kärnten) (AT)**

(74) Vertreter : **Rau, Manfred, Dr. Dipl.-Ing. et al**
**Rau & Schneck, Patentanwälte Königstrasse 2**
**W-8500 Nürnberg 1 (DE)**

EP 0 383 364 B1

EP 0 383 364 B1

## Beschreibung

Die Erfindung betrifft ein Verfahren zur Herstellung von ringförmigen Gegenständen gemäß dem Oberbegriff von Anspruch 1, insbesondere von Schubschlaufen, die wenigstens eine Lage aus Leder und eine mit dieser Lage verbundene, als Träger dienende Lage aus Kunststoff aufweisen, wobei man die Lage aus Leder in Form eines Zuschnittes einschließlich seiner Ränder innerhalb des Hohlraumes einer Form anordnet und in der Form durch Ansaugen an der Wand des Formhohlraumes festhält, wobei man den Zuschnitt im Formhohlraum mit dem Kunststoff verbindet, indem man in den Formhohlraum einen Kunststoff in fließfähigem Zustand oder in festem Zustand, vorzugsweise als Vorformling, den man wenigstens im Bereich seiner Oberfläche in seinen plastischen Zustand überführt, einbringt und in den Zuschnitt eindringen läßt und wobei man den Kunststoff um die Ränder des Zuschnittes herumformt.

Bislang ist man bei der Herstellung von Gegenständen, die aus Leder und einer damit verbundenen Lage aus Kunststoff bestehen, so vorgegangen, daß man die beiden Lagen unter Zuhilfenahme eines Klebstoffes miteinander verbunden hat. Diese Verfahrensweise hat den Nachteil, daß die so erhaltenen, zusammengesetzten Gegenstände in weiteren, u. U. recht aufwendigen Arbeitsschritten zu den endgültigen Gegenständen verarbeitet werden müssen. Dabei ergeben sich zwangsweise Schnittkanten im Werkstoff aus Leder, die wegen des dort möglichen Eintrittes von Feuchtigkeit in das Leder nachteilig sind. Überdies war man bei der Herstellung räumlicher Gebilde gezwungen, komplizierte Zuschnitte anzufertigen, die man dann durch Nähen, Kleben, Schweißen u. dgl. zu dem räumlichen Gegenstand fertigstellt.

Aus der CH-A-572 390 ist ein Verfahren zur Herstellung von Uhrbändern mit den Merkmalen des einleitenden Teils des Anspruches 1 bekannt. Bei dem aus der CH-A-572 390 bekannten Verfahren zur Herstellung von Uhrbändern werden die Ränder der Zuschnitte aus Leder nur teilweise vom Kunststoff bedeckt. Bei der in der CH-A-572 390 beschriebenen Arbeitsweise wird der Zuschnitt in der Form nur in seinem mittleren Bereich durch Ansaugen festgehalten, da im Randbereich weder Saugkanäle zum Festhalten des Zuschnittes vorgesehen sind noch andere Maßnahmen zum Festhalten des Randbereiches an der Wand der Form getroffen werden.

Der Erfindung liegt die Aufgabe zugrunde, ein Verfahren anzugeben, mit dem in einem einzigen Arbeitsschritt aus einer fertig zugeschnittenen Lage aus Leder der wenigstens hinsichtlich seiner Form und Kontur fertige Gegenstand erhältlich ist.

In Lösung dieser Aufgabe sieht die Erfindung vor, daß man gemäß Anspruch 1 den Zuschnitt durch das Ansaugen an die Wand des Formhohlraumes und durch den in den Formhohlraum eingebrachten Kunststoff die ringförmige Form erteilt, daß man die Ränder des Zuschnittes durch Ansaugen an die Wand des Formhohlraumes an dieser Wand des Formhohlraumes festhält und daß man den Kunststoff so um die Ränder des Zuschnittes herumformt, daß die Außenfläche des Zuschnittes mit der Außenfläche des Kunststoffes bündig verläuft.

Bei Anwendung des erfindungsgemäßen Verfahrens können weitgehend beliebige Zuschnitte aus Leder oder lederähnlichem Werkstoff, so auch sehr dünne Leder (flämmige Leder) zu ringförmigen Gegenständen verarbeitet werden. Nach dem erfindungsgemäßen Verfahren können nicht nur Zuschnitte aus Leder, sondern auch Zuschnitte aus lederähnlichen Werkstoffen verarbeitet werden. Der in der Beschreibung und in den Patentansprüchen verwendete Begriff "Leder" schließt daher lederähnliche Werkstoffe mit ein. Von besonderem Vorteil beim erfindungsgemäßen Verfahren ist es, daß die mit dem Leder verbundene Kunststofflage alle Schnittkanten und die Fleischseite der Lage aus Leder versiegelt. Dadurch ergibt sich nicht nur ein allseitiger Schutz der Lage aus Leder, sondern es ist auch eine formschlüssige Verbindung zwischen den beiden Lagen des erfindungsgemäß erhältlichen, ringförmigen Gegenstandes gewährleistet.

Für die Ausführung des erfindungsgemäßen Verfahrens gibt es verschiedene Möglichkeiten. So kann der Kunststoff in den Formhohlraum, in dem der oder die entsprechend zugerichteten Zuschnitte aus Leder zuvor eingebracht worden sind, durch Spritzgießen, durch Spritzprägen oder aber (insbesondere bei der Verarbeitung von Duroplasten) durch Gießen eingebracht werden. Wesentlich ist dabei, daß der Kunststoff in den Formhohlraum in einem derart fließfähigen Zustand eingebracht oder in der Form wenigstens oberflächlich fließfähig gemacht wird, daß er zur Erreichung der formschlüssigen Verbindung in die Lage aus Leder eindringen kann. Diese Fließfähigkeit des Kunststoffes kann bei Thermoplasten dadurch erreicht werden, daß sie entsprechend erwärmt werden, wobei Temperaturen zwischen 100 und 300°C, vorzugsweise etwa 200°C bevorzugt sind. Sinngemäßes gilt für thermoplastische Elastoplaste.

Bei Verwendung von härtenden Kunststoffen empfiehlt es sich, diese in Form eines Präpolymeren oder Monomeren in die Form einzubringen und diesen dann in der Form (durch Vernetzung) aushärten zu lassen.

In jedem Fall kann dem Kunststoff ein Treibmittel zugegeben werden, um zu gewährleisten, daß die Lage aus Kunststoff im fertigen Gegenstand eine Schaumstruktur besitzt.

Der verwendete Kunststoff kann je nach der Bestimmung des erfindungsgemäß herstellbaren Gegenstan-

2

des von starr bzw. steif bis gummielastisch sein.

Für die Ausführung des erfindungsgemäßen Verfahrens ist es zur Schonung der Lage aus Leder von Vorteil, wenn die Form auf nicht zu hohe Temperaturen aufgeheizt wird. Kurzfristig sind für echtes Leder Temperaturen bis 120°C möglich, ohne daß das Leder dauernd beschädigt wird. Es empfiehlt sich daher, bei der Ausführung des erfindungsgemäßen Verfahrens die Form nicht gesondert zu temperieren, sondern ihr Wärme ausschließlich über den mit einer Temperatur zwischen 100 und 300°C, beispielsweise etwa 200°C, eingebrachten Kunststoff zuzuführen. Es stellt sich dann im Arbeitszyklus ein Gleichgewicht zwischen zugeführter und abgeführter Wärme ein, wobei die Form die mittlere Temperatur von beispielsweise 40°C haben kann.

Für gewöhnlich wird bei der Ausführung des erfindungsgemäßen Verfahrens beim Spritzgießen im Formhohlraum ein Druck zwischen 100 und 1000 bar angewendet.

Die Formung des zunächst flachen Zuschnittes aus Leder erfolgt dadurch, daß der Zuschnitt durch Anlegen von Unterdruck an die entsprechend geformte Wand der Form angesaugt wird, wobei nach dem erfindungsgemäßen Verfahren die Ansaugöffnungen auch im Bereich der Außenränder des Zuschnittes aus Leder angeordnet sind. Zusätzlich wird dem Zuschnitt aus Leder beim erfindungsgemäßen Verfahren seine endgültige räumliche Form dadurch gegeben, daß der Zuschnitt durch den Fülldruck, unter dem der Kunststoff in die Form eingebracht wird, an die Formwand gedrückt wird.

Beim erfindungsgemäßen Verfahren wird also die Verformung des Zuschnittes aus Leder teils durch Ansaugen an die Formwand der Formhälfte und teils durch den Fülldruck des Kunststoffes bewirkt. Dabei wird man in der Regel bemüht sein so vorzugehen, daß die Verformung unter der Einwirkung des Druckes des Kunststoffes das Ausmaß der Dehnbarkeit des Zuschnittes aus Leder nicht überschreitet, damit dieser beim Einbringen des Kunststoffes in der Form keine Relativbewegung gegenüber der Formwand, insbesondere im Bereich ihrer Ränder ausführt.

Die endgültige Umrißform des Zuschnittes aus Leder kann vor dem Einlegen in die Form durch Stanzen oder Zuschneiden oder durch einen gleichzeitig mit der Schließbewegung der Form ausgeführten Stanzvorgang festgelegt werden. Auch Kombinationen sind möglich.

Mit dem erfindungsgemäßen Verfahren werden ringförmige Gegenstände, z.B. Schubschlaufen für Uhrbänder erhalten, deren Form durch den mit der Lage aus Leder verbundenen Kunststoff bestimmt ist. Dadurch ist es möglich, aus flachen Lederzuschnitten praktisch jede beliebige Form herzustellen, wobei auch Wellungen, Gegenstände mit unterschiedlicher Dicke usw. herstellbar sind.

Wenn ein thermoplastischer Kunststoff nach dem Spritzprägeverfahren verarbeitet wird, dann empfiehlt es sich, die Formwerkzeuge etwas vorzuwärmen, damit sich der Kunststoff beim Schließen der Form in der Form gleichmäßig verteilen kann und nicht vorzeitig erstarrt.

Schließlich kann beim erfindungsgemäßen Verfahren das Reaktionsspritzgießverfahren angewendet werden, bei dem ein Mehr-Komponenten-Kunststoff in den Formhohlraum eingebracht wird und in diesem vernetzt. Dieses Verfahren ist beispielsweise für Polyurethane anwendbar.

Die beim Vernetzen von Duroplasten und/oder beim Aufschäumen von Kunststoffen eintretende Volumsvergrößerung kann auch dazu herangezogen werden, den Zuschnitt aus Leder dicht an die ihm zugeordnete Wand der Form anzulegen.

Für nach dem erfindungsgemäßen Verfahren verarbeitbare bzw. in diesem Verfahren verwendbare Kunststoffe sind alle Thermoplaste, Elastoplaste, thermoplastische Kautschuke, wie z. B. Polyurethan, Ionomere, Silikonkautschuk oder Duroplaste, Polyolefine, wie Polyäthylen und Polypropylen sowie Polystyrole und viele andere mehr.

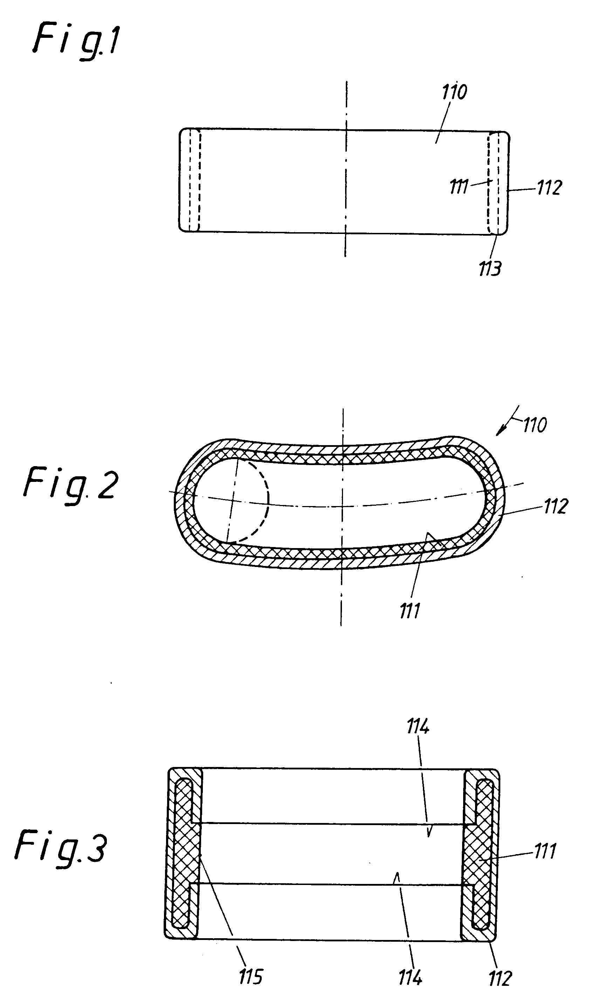

Nachstehend wird als Ausführungsbeispiel die Herstellung der in Figur 1 und 2 der angeschlossenen Zeichnung gezeigten Schubschlaufe im Spritzgießverfahren beschrieben:

In der Formhälfte einer Spritzgießform mit ringförmigem Formhohlraum wird ein entsprechend zugeschnittener Lederstreifen 112 so in die Form eingelegt, daß sich seine Außenfläche an die Formwand anlegt und durch im Bereich seiner Längsseitenränder angelegte Vakuumöffnungen (beispielsweise ein ringsumlaufender Schlitz) an die Formhälfte angesaugt wird. Das Einlegen des Zuschnittes 112 in den Formhohlraum kann von Hand aus oder mit Hilfe einer Umsetzvorrichtung erfolgen, die den zugeschnittenen Lederstreifen aus einer Schablone mit ebener Auflagefläche oder einem Vorratsmagazin definiert entnimmt und in die Formhälfte einlegt. Diese Verfahrensweise hat den Vorteil, daß der Zuschnitt 112 genau definiert in die Formhälfte eingelegt wird und so das wegen des angelegten Unterdruckes schwierige bzw. überhaupt unmögliche, nachträgliche Zurechtrücken des Zuschnittes 112 entfallen kann. Dann wird die Form geschlossen.

Der die Lage 1 bildende Kunststoff, im vorliegenden Fall ein thermoplastischer Kautschuk (Polyurethan), wird in der Spritzeinheit aufgeschmolzen und in den Schneckenvorraum gefördert, wobei nach Vorhandensein einer ausreichenden Menge an Kunststoff die Schnecke zur Ausführung des Einspritzvorganges axial vorgeschoben und der Formhohlraum mit der Kunststoffschmelze ausgefüllt wird. Die Temperatur des Kunststoffes im Schneckenvorraum (Massetemperatur) beträgt etwa 250°C, die Temperatur des Werkzeuges im Mittel 40°C

3

und der Einspritzdruck, das ist der Druck, mit dem die Schnecke axial beim Einspritzvorgang beaufschlagt wird, beträgt 100 bar.

Nach einer Kühlphase von 10 Sekunden wird die Form geöffnet und die Schubschlaufe 110 kann entnommen werden, wozu auch ein automatischer Ausstoßer tätig werden kann.

Die eine Formhälfte des ringförmigen Formhohlraumes, in welche der Zuschnitt 112 aus Leder eingelegt wird, kann gegenüber der anderen Formhälfte quer zur Schließrichtung verschiebbar (Schiebetisch, Rundtisch od. dgl.) sein, um den Einlegevorgang zu vereinfachen.

Ausführungsformen für nach dem erfindungsgemäßen Verfahren herstellbare, ringförmige Gegenstände sind in der angeschlossenen Zeichnung dargestellt. Es zeigen

Figur 1 eine Schubschlaufe für Riemen in Ansicht,

Figur 2 die Schubschlaufe aus Figur 1 im Querschnitt und

Fig 3 eine Schubschlaufe einer abgeänderten Ausführungsform im Axalschnitt.

Die in Figur 1 in Ansicht und in Figur 2 im Schnitt gezeigte Schubschlaufe 110 besteht aus einer Lage aus Kunststoff in Form eines ringförmigen Trägers 111 und einer die Flächen des ringförmigen Trägers 111 außen bedeckenden Lage 112 aus Leder.

Der Träger 111 besteht aus Kunststoff, beispielsweise Polyurethan, Polyäthylen, Äthylenvinylacetat, einem thermoplastischen Kautschuk, einem Polyamid od. dgl. elastischen Kunststoffen.

Die Lage 112 kann vor den ringförmigen Endrändern 113 des Trägers 111 enden oder teilweise um die Endränder 113 herumgezogen sein.

Bei der in Figur 3 gezeigten Ausführungsform sind die ringförmigen Enden 114 der Lage 112 auf der Innenfläche 115 des ringförmigen Trägers 111 im Abstand voneinander angeordnet. Aus Figur 3 ist weiters ersichtlich, daß die von der Lage 112 nicht bedeckten Bereiche des Trägers 111 mit der Oberfläche der Lage 112 bündig sind, so daß sich stufenlose Übergänge zwischen den verschiedenen Werkstoffen, aus welchen die erfindungsgemäß herstellbare Schubschlaufe 110 besteht, ergeben. Dies gilt insbesondere auch für den Stoßbereich zwischen den senkrecht zu den ringförmigen Endrändern 114 des ringförmigen Trägers 111 verlaufenden Enden der Lage 112.

Die erfindungsgemäße Schubschlaufe 110 kann im Spritzgießverfahren hergestellt werden, wobei beispielsweise so vorgegangen werden kann, daß ein in eine entsprechende Form eingelegter, gegebenenfalls vorgeformter Zuschnitt aus Leder, der dann die Lage 112 bildet, mit dem den ringförmigen Träger 111 bildenden Kunststoff in der Spritzgußform hinterspritzt wird. Bei diesem Vorgang dringt der Werkstoff des Trägers 111 von der Unterseite (bei Leder ist dies die Faser- oder Fleischseite) in die Lage 112 ein, so daß sich eine innige formschlüssige Verbindung zwischen den beiden Werkstoffen ergibt.

Für den ringförmigen Träger 111 besonders geeignete Werkstoffe sind PU-Elastomer, PE-Ionomer oder aber LD-PE (= Low density PE).

Darüber hinaus lassen sich bei Verwendung entsprechender Formen nach dem erfindungsgemäßen Verfahren auch bei Verwendung von Zuschnitten aus Leder, die überall gleich stark sind, beliebige Oberflächenstrukturen erzeugen. Das mühsame und zeitaufwendige Zurichten (Verdünnen und Anschärfen) von Leder oder lederähnlichen Werkstoffen entfällt dann.

## Patentansprüche

1. Verfahren zur Herstellung von ringförmigen Gegenständen (110), insbesondere von Schubschlaufen, die wenigstens eine Lage (112) aus Leder und eine mit dieser Lage (112) verbundene, als Träger dienende Lage (111) aus Kunststoff aufweisen, wobei man die Lage aus Leder in Form eines Zuschnittes (112) einschließlich seiner Ränder (114) innerhalb des Hohlraumes einer Form anordnet und in der Form durch Ansaugen an der Wand des Formhohlraumes festhält, wobei man den Zuschnitt (112) im Formhohlraum mit dem Kunststoff verbindet, indem man in den Formhohlraum Kunststoff in fließfähigem Zustand oder in festem Zustand, vorzugsweise als Vorformling, den man wenigstens im Bereich seiner Oberfläche in seinen plastischen Zustand überführt, einbringt und in den Zuschnitt (112) eindringen läßt und wobei man den Kunststoff um die Ränder (114) des Zuschnittes (112) herumformt, dadurch gekennzeichnet, daß man den Zuschnitt (112) durch das Ansaugen an die Wand des Formhohlraumes und durch den in den Formhohlraum eingebrachten Kunststoff die ringförmige Form erteilt, daß man die Ränder (114) des Zuschnittes (112) durch Ansaugen an die Wand des Formhohlraumes an dieser Wand des Formhohlraumes festhält und daß man den Kunststoff (111) so um die Ränder (114) des Zuschnittes (112) herumformt, daß die Außenfläche des Zuschnittes (112) mit der Außenfläche des Kunststoffes (111) bündig verläuft.

2. Verfahren nach Anspruch 1, dadurch gekennzeichnet, daß man den Kunststoff (111) so um die Ränder (114) des Zuschnittes (112) herumformt, daß die Ränder (113) des ringförmigen Gegenstandes teils durch den Zuschnitt (112) und teils durch den Kunststoff (111) gebildet werden.

3. Verfahren nach Anspruch 1, dadurch gekennzeichnet, daß man den Kunststoff (111) so um die Ränder des Zuschnittes (112) herumformt, daß die Ränder (113) des ringförmigen Gegenstandes vom Kunststoff (111) gebildet werden.

4. Verfahren nach Anspruch 1, dadurch gekennzeichnet, daß man dem Zuschnitt (112) im Formhohlraum durch Ansaugen an die Wand desselben eine Form erteilt, in der sich der Zuschnitt (112) bis auf die Innenseite des herzustellenden ringförmigen Gegenstandes (110) erstreckt und daß die Ränder (114) des Zuschnittes (112), die auf der Innenseite des ringförmigen Gegenstandes (110) angeordnet sind, im Abstand voneinander angeordnet sind.

## Claims

1. Method for producing annular objects (110), particularly strap loops, which have at least one layer (112) made of leather and, joined to said layer (112), a layer (111) made of plastic acting as a backing material, the layer made of leather in the form of a cut piece (112) being with its edges (114) arranged inside the cavity of a mould and held securely in the mould by suction against the wall of the mould cavity, the cut piece (112) being joined in the mould cavity to the plastic by introducing into the mould cavity plastic in a flowable state or in a solid state, preferentially as a preform which is converted at least in the region of its surface into its plastic state and by allowing it to penetrate into the cut piece (112), and the plastic being moulded around the edges (114) of the cut piece (112), characterised in that the annular shape is imparted to the cut piece (112) by the suction against the wall of the mould cavity and by the plastic introduced into the mould cavity, that the edges (114) of the cut piece (112) are held by suction against the wall of the mould cavity securely against said wall of the mould cavity and that the plastic (111) is moulded around the edges (114) of the cut piece (112) such that the outer surface of the cut piece (112) extends flush with the outer surface of the plastic (111).

2. Method according to claim 1, characterised in that the plastic (111) is moulded around the edges (114) of the cut piece (112) such that the edges (113) of the annular object are formed partly by the cut piece (112) and partly by the plastic (111).

3. Method according to claim 1, characterised in that the plastic (111) is moulded around the edges of the cut piece (112) such that the edges (113) of the annular object are formed by the plastic (111).

4. Method according to claim 1, characterised in that a shape is imparted to the cut piece (112) in the mould cavity by suction against the wall thereof, in which the cut piece (112) extends up to the inside of the annular object (110) to be manufactured and that the edges (114) of the cut piece (112), which are arranged on the inside of the annular object (110), are arranged at a distance from each other.

## Revendications

1. Procédé de fabrication d'objets annulaires (110), notamment de boucles de poussée, qui comportent une couche (112) en cuir et une couche (111) en matière synthétique servant de support et reliée à cette couche (112), dans lequel on dispose la couche en cuir sous la forme d'une pièce découpée (112), y compris ses bords (114) à l'intérieur de la cavité d'un moule et on la maintient dans le moule par aspiration contre la paroi de la cavité du moule, et on relie la pièce découpée (112) dans la cavité du moule avec la matière synthétique, en introduisant dans la cavité du moule la matière synthétique à l'état fluide ou à l'état solide, de préférence en tant que préforme qu'on amène à son état plastique au moins au voisinage de sa surface, et qu'on la laisse pénétrer dans la pièce découpée (112), et où on conforme la matière synthétique autour des bords (114) de la pièce découpée (112), caractérisé en ce qu'on impartit, à la pièce découpée (112), par l'aspiration contre la paroi de la cavité de moule et par la matière synthétique introduite dans la cavité de moule, la forme annulaire, en ce que, par aspiration contre la paroi de la cavité de moule, on maintient les bords (114) de la pièce découpée (112) fixement contre cette paroi de la cavité de moule,et en ce qu'on conforme la matière synthétique (111) de telle façon autour des bords (114) de la pièce découpée (112) que la face externe de la pièce découpée (112) soit en affleurement avec la face externe de la matière synthétique (111).

2. Dispositif selon la revendication 1, caractérisé en ce qu'on conforme la matière synthétique (111) de telle façon autour des bords (114) de la pièce découpée (112) que les bords (113) de l'objet annulaire soient formés en partie par la pièce découpée (112) et en partie par la matière synthétique (111).

3. Dispositif selon la revendication 1, caractérisé en ce qu'on conforme la matière synthétique (111) de telle façon autour des bords de la pièce découpée (112) que les bords (113) de l'objet annulaire soient formés par la matière synthétique (111).

4. Dispositif selon la revendication 1, caractérisé en ce qu'on impartit, à la pièce découpée (112), dans la cavité du moule, par aspiration contre la paroi de celui-ci une forme dans laquelle la pièce découpée (112) s'étend jusqu'à la face interne de l'objet annulaire (110) à fabriquer, et en ce que les bords (114) de la pièce découpée (112), qui sont disposés sur la face interne de l'objet annulaire (110), soient disposés à distance les uns des autres.

*Fig.1*

*Fig.2*

*Fig.3*